# EUROPÄISCHE PATENTANMELDUNG

(11) **EP 3 115 188 A1**
(43) Veröffentlichungstag der Anmeldung: **11.01.2017**
(21) Anmeldenummer: 15176091.5
(22) Anmeldetag: 09.07.2015
(51) Int. Cl.: B29D 11/00

(54) **BRILLENGLASROHLING MIT AUF EINEN BESCHICHTUNGSVORGANG ANGEPASSTER GEOMETRIE**

(71) Anmelder: Carl Zeiss Vision International GmbH, 73430 Aalen (DE)
(72) Erfinder: Ellenrieder, Marc, 73431 Aalen (DE); Nunan, David, Narre Warren North, 3804 (AU)
(74) Vertreter: Carl Zeiss AG - Patentabteilung

(57) **Zusammenfassung**

Die Erfindung betrifft ein Brillenglasfertigfabrikat (11) mit einer Oberfläche, welche durch
- eine nach außen weisende Wölbung aufweisende, optisch fertig bearbeitete Vorderfläche (12),
- eine nach innen weisende Wölbung aufweisende, optisch fertig bearbeitete Rückfläche (13) und
- eine die Vorderfläche (12) und die Rückfläche (13) miteinander verbindende zylinderförmige Zylinderrandfläche (14) gebildet ist. Erfindungsgemäß ist vorgesehen, dass
- die Zylinderrandfläche (14) rückflächenseitig durch eine umlaufende Linie (15) begrenzt ist, die in einer Ebene (16) liegt und dass
- die Zylinderrandfläche (14) senkrecht zu der Ebene (16) angeordnet ist.

## Beschreibung

Die Erfindung betrifft ein Brillenglasfertigfabrikat nach dem Oberbegriff des Patentanspruchs 1, ein Verfahren zum Herstellen eines derartigen Brillenglasfertigfabrikats nach dem Oberbegriff des Patentanspruchs 8, Vorrichtungen zum Herstellen eines Brillenglasfertigfabrikats der vorstehend angegebenen Art nach dem Oberbegriff der Patentansprüche 9 oder 10 sowie eine geeignete Verwendung für ein derartiges Brillenglas nach dem Oberbegriff des Patentanspruchs 11.

Eine Brille ist eine vor den Augen getragene Konstruktion mit zumindest einem, vorzugsweise genau zwei, dem Schutz der Augen oder zur Korrektur von Fehlsichtigkeiten und Stellungsfehlern der Augen dienenden Brillengläsern. Brillengläser zur Korrektur von Fehlsichtigkeiten werden daher auch als Komekturgläser oder als optisch wirksame Brillengläser bezeichnet. Derartige Brillengläser können etwa Einstärkengläser oder Mehrstärkengläser, insbesondere Bifokalgläser, Trifokalgläser oder auch Gleitsichtgläser sein. Fehlsichtigkeiten können beispielhaft etwa Kurzsichtigkeit (Myopie), Fernsichtigkeit (Hyperopie), Stabsichtigkeit (Astigmatismus) sowie weitere normabweichende und/oder suboptimale Zustände des Sehsinns umfassen. Zu den Fehlsichtigkeiten gehört auch die Altersweitsichtigkeit (Presbyopie).

Korrekturgläser unterscheidet man in Plusgläser und Minusgläser. Ein Plusglas hat eine sammelnde und das betrachtete Objekt vergrößernde optische Wirkung. Ein Minusglas hat eine streuende und das betrachtete Objekt verkleinernde optische Wirkung.

Bei den Korrekturgläsern unterscheidet man zwischen Lagergläsern und Rezeptgläsern. Lagergläser werden ohne Rezeptvorgabe hergestellt. Rezeptgläser werden erst nach Eingang der Brillenglasbestellung gefertigt.

Rezeptbrillengläser werden auftragsspezifisch nach den speziell auf den einzelnen Brillenträger abgestimmten Anforderungen hergestellt. Im allgemeinen erfolgt die Fertigung der Brillengläser durch Verwendung einer begrenzten Anzahl unterschiedlicher Typen von halbfertigen Brillenglasrohlingen, den sogenannten Halbfabrikaten, die der Brillenglashersteller auf Lager hält. Brillenglas-Halbfabrikate weisen genauso wie Bullenglas-Fertigfabukate jeweils eine für die objektseitige und eine für die gegenüberliegende augenseitige Anordnung für einen Brillenträger bestimmte optische Flächen und eine diese beabstandende Fläche auf. Die für die Anordnung auf der Objektseite bestimmte optische Fläche wird Vorderfläche bezeichnet, die für die Anordnung auf der Augenseite bestimmte optische Fläche wird Rückfläche genannt. Die dazwischen liegende entweder unmittelbar eine Kante bildende oder mittelbar über eine Kantenfläche einendseitig an die Vorderfläche und andernendseitig an die Rückfläche angrenzende Fläche bezeichnet man als Zylinderrandfläche (auch wenn sie nicht zwangsläufig zylindrisch ausgestaltet ist). Die Vorderfläche ist im allgemeinen konvex gekrümmt, die Rückfläche konkav.

Bei einem Halbfabrikat hat entweder die Vorder- oder die Rückfläche die endgültige Form erhalten. Die andere Fläche wird derart bearbeitet, dass das optische System des fertigen Brillenglases der ophthalmischen Verordnung des Brillenträgers entspricht. Bei einem Fertigfabrikat haben Vorder- und Rückfläche bereits die Endkontur. Endkontur oder endgültige Form einer Fläche bedeutet, dass kleinere Bearbeitungen der finalen Fläche bzw. der finalen Flächen vorgenommen werden können, aber stets ohne dass ihre Krümmung bzw. ihre Krümmungen verändert wird bzw. werden. Insbesondere ist es möglich, dass eine oder mehrere Funktionsschichten aufgebracht werden. Brillenglas-Halbfertigfabrikate sind demnach Linsenrohlinge mit nur einer optisch fertig bearbeiteten Fläche (vgl. Heinz Diepes, Rolf Blendowske "Optik und Technik der Brille", Optische Fachveröffentlichung GmbH, Heidelberg, 2002, Seite 560). Brillenglas-Fertigfabrikate sind Brillenglasrohlinge mit zwei optisch fertig bearbeiteten gegenüberliegenden Flächen. Die vorliegende Erfindung betrifft ausschließlich Brillenglasrohlinge des zuletzt genannten Typs, also Brillenglasfertigfabrikate.

Auftragsspezifische Rezeptbrillengläser, d.h. insbesondere individualisierte Einstärken- und Mehrstärkengläser, deren optische Eigenschaften wenigstens teilweise nicht vorauswählbar standardisiert sind, sondern in Bezug auf deren Maß und/oder deren Anordnung auf dem Brillenglas auf den Benutzer angepasst individuell berechnet und gefertigt werden, und im Besonderen Gleitsicht- bzw. Progressivgläser werden durch mechanische, insbesondere deformierende und/oder abrasive, Verfahren in ihre finale Form gebracht. Hierbei können die Außenformen rund, oval oder willkürlich, sogenannte Freiformen beschreibend, ausgebildet werden.

In der Regel wird das Brillenglas zur auftragsspezifischen Bearbeitung einer Fläche mit Hilfe einer geeigneten Halterung an der gegenüberliegenden Fläche fixiert. In der Fachsprache wird dieser Vorgang als Blocken bezeichnet.

Aus der US 2004/0066487 A1, von der die Erfindung ausgeht, ist ein Brillenglasrohling mit einer konvexen Vorderfläche und einer konkaven Rückfläche bekannt, welcher auf seiner konkaven Rückfläche einen im Wesentlichen zylindrischen Klemmabschnitt aufweist. Die Zylinderhöhe des Klemmabschnitts ist geringer als ein Drittel der Zylinderhöhe der gesamten Zylinderrandfläche, beträgt aber mindestens 5 mm.

In die Stirnseite des im Wesentlichen zylindrische Klemmabschnitts sind in diametral gegenüberliegender Anordnung zwei Kerben unterschiedlicher Tiefe eingebracht, die zur mechanischen Winkelausrichtung beim Blocken, d.h. Positionieren, des Brillenglasrohlings dienen. Die Kerben haben eine Tiefe zwischen 3 mm und 6 mm. Der Klemmabschnitt selbst dient zum Greifen und Klemmen bei der Oberflächenbearbeitung an verschiedenen Bearbeitungsstationen.

Welche Form das Brillenglas erhalten muss, um die gewünschte optische Korrektur zu erhalten, wird maßgeblich von dessen Werkstoff bestimmt. Wichtigster Parameter ist hierbei der Brechungsindex des Werkstoffs. Während in der Vergangenheit Brillengläser vorwiegend aus mineralischen Gläsern, insbesondere Krongläsern (Abbe-Zahl > 55) und Flintgläsern (Abbe-Zahl < 50) hergestellt wurden, sind mittlerweile Brillengläser aus einer Vielzahl an organischen Materialien erhältlich. Derartige Grundmaterialien für organische Brillengläser werden unter den Handelsbezeichnungen CR 39, MR 8, MR 7, CR 330 sowie MR 174 angeboten. Eine Auswahl solcher Grundmaterialien findet sich auch in der Veröffentlichungsschrift EP 2692941 A1. Laufend werden andere Werkstoffe auf deren Eignung für organische Brillengläser getestet und entwickelt. Die folgende Tabelle 1 veranschaulicht Kenngrößen sowie Bezugsgrößen einer Auswahl an bekannten Grundmaterialien:

**Tabelle 1: Grundmaterialien für die Herstellung von Brillengläsern**

| Handelsname | Grundmaterial | Mittlerer Brechungsindex nₑ | Abbe-Zahl vₑ |
|---|---|---|---|
| CR 39 | Polyallyldiglycolcarbonat | | |
| CR607 | | | |
| CR630 | | 1.500 | 56 |
| Trivex | Polyharnstoff / Polyurethan | 1.530 | 45 |
| PC | Polycarbonat | 1.590 | 29 |
| MR 8 | Polythiourethan | 1.598 | 41 |
| MR7 | Polythiourethan | 1.664 | 32 |
| MR 10 | Polythiourethan | 1.666 | 32 |
| MR 174 | Poly(episulfid) | 1.738 | 32 |
| | Mineral 1.5 | 1.525 | 58 |
| | Mineral 1.6 | 1.604 | 44 |

Derzeit werden eine große Anzahl an organischen Brillenglas-Halbfertigfabrikaten oder-Fertigfabrikaten mit sphärischen, rotationssymmetrisch asphärischen oder progressiven Vorderflächen in Massenfertigung in Urformen mit Vorder- und Rückflächenformschalen, die mittels eines Dichtrings einen Hohlraum bildend voneinander beabstandet sind, abgegossen, wie dies z.B. in den Dokumenten DE 3007572 C2, US 6,103,148 A oder JP 2008 191186 A beschrieben ist. Dies gilt für Grundmaterialien mit den Handelsbezeichnungen MR 7, MR 8, MR 10 sowie CR 39, CR 607, CR 630 und weitere. Bei den Grundmaterialien mit den Handelsbezeichnungen MR 7, MR 8 und MR 10 handelt es ich um Polythiourethane, die von der Firma Mitsui Chemicals vertrieben werden. Die Abkürzung "MR" steht dabei für Mitsui Resin. CR 39 oder Columbia Resin 39 ist die von der Firma Pittsburgh Plate Glass Industries (PPG Industries) gewählte Marke, unter der der Werkstoff Polydiethylenglycolbisallylcarbonat bzw. Polyallyldiglycolcarbonat (Abkürzung: PADC) vertrieben wird. Hierbei handelt es sich um einen höherbrechenden duroplastischen Polymerwerkstoff. CR 607 und CR 630 stammen ebenfalls von der Firma PPG. Die Materialien CR 607 und CR 630 werden z.B. für photochrome Anwendungen eingesetzt.

Halbfertigfabrikate oder Fertigfabrikate für Brillengläser aus Polycarbonat werden im Allgemeinen in Metallformen mittels Spritzgusstechnik erzeugt. Dieses Herstellverfahren ist z.B. in der EP 0955147 A1 beschrieben.

Mineralische Brillengläser werden regelmäßig durch maschinelle mechanisch abrasive Bearbeitung eines Rohlings erzeugt.

Die vorstehend beschriebenen Fertigfabrikate werden häufig einem oder mehreren Veredelungsprozessen unterzogen. Insbesondere werden ein- oder beidseitig Funktionsbeschichtungen appliziert. Derartige Funktionsbeschichtungen umfassen eine oder mehrere Schichten, die die Brillengläser mit vorbestimmten und für den Brillenträger vorteilhaften Eigenschaften ausstatten, die die Brillengläser allein aufgrund der Eigenschaften des Grund- oder Trägermaterials, auf das die Funktionsbeschichtungen ggf. appliziert werden, und der Formgebung nicht hätten. Derartige vorteilhafte Eigenschaften sind neben optischen Eigenschaften wie z.B. Entspiegelung, Verspiegelung, Lichtpolarisierung, Färbung, Selbsttönung usw. auch mechanische Eigenschaften wie Härtung, Verminderung des Anhaftens von Schmutz oder des Beschlagens usw. und/oder elektrische Eigenschaften wie Abschirmung von elektromagnetischer Strahlung, Leitung von elektrischem Strom usw. und/oder andere physikalische oder chemische Eigenschaften.

Unter Applizieren einer Beschichtung oder Beschichten (englisch coating) wird in der Fertigungstechnik eine Hauptgruppe der Fertigungsverfahren nach DIN 8580 verstanden, die zum Aufbringen einer oder mehreren festhaftenden Schichten aus formlosem Stoff oder ggf. mehreren Stoffen auf die Oberfläche eines Werkstückes genutzt werden. Der entsprechende Vorgang sowie die aufgetragene Schicht oder die aufgetragenen Schichten selbst wird bzw. werden auch als Beschichtung bezeichnet. Bei einer Beschichtung kann es sich um eine dünne Schicht oder eine dicke Schicht sowie um mehrere in sich zusammenhängende Schichten handeln, die Unterscheidung ist in der Regel nicht genau definiert und orientiert sich am Beschichtungsverfahren und Anwendungszweck. Die Beschichtungsverfahren unterscheiden sich durch die Art der Schichtaufbringung in chemische, mechanische, thermische und thermomechanische Verfahren.

Die Fertigfabrikate müssen bei Beschichtungsvorgängen in der Regel mit einer Halterung gehalten werden, damit Vorder- und Rückseite gleichermaßen beschichtet werden können. Oftmals sind dabei auch Temperprozesse zu durchlaufen, die eine nicht unerhebliche Wärmelast in das Fertigfabrikat einbringen. Dadurch kommt es insbesondere bei organischen, dünnen Fertigfabrikaten oftmals zu Verwindungen durch interne Spannungen, die durch ggf. ungeeignete Halter oder solche aus Materialien mit anderen Temperaturausdehnungskoeffizienten noch verstärkt werden. Dies hat negative Auswirkungen auf die Formtreue und damit die optische Wirkung der fertigen Brillengläser.

Bei einseitigen Beschichtungen oder bei unterschiedlichen Beschichtungen auf beiden Brillenglasoberflächen, die z.B. durch Rotationsbeschichtung (sogenanntes Spin-Coating), durch Tauchbeschichtung oder durch Aufdampfen aufgebracht werden, ist eine Kontamination der gegenüberliegenden Oberfläche des Brillenglasrohlings unbedingt zu vermeiden. Durch unterschiedliche Rand- bzw. Kantenbeschaffenheit kann es zu Abplatzungen, Rissen in der Beschichtung, Lackwulsten oder dergleichen kommen.

Eine Handhabung von Fertigfabrikaten herkömmlicher Art ist praktisch nur am Rand bzw. an einer Funktionsfläche möglich, was mit der Gefahr einer Beschädigung verbunden ist. Informationen zu Fertigungsprozessparametern, zur Rückverfolgbarkeit und zur Steuerung von Fertigungsprozessen sind auf derartigen Fertigfabrikaten nur schwer unterzubringen, ohne die nutzbare Glasfläche zu verringern.

Die Aufgabe der Erfindung besteht daher darin, ein Brillenglasfertigfabrikat bereitzustellen, welches eine auf einen Beschichtungsvorgang angepasste Geometrie aufweist. Weiterhin besteht die Aufgabe der Erfindung darin, ein entsprechendes Verfahren und eine Vorrichtung zur Herstellung eines Brillenglasfertigfabrikats mit angepasste Geometrie bereitzustellen. Schließlich besteht die Aufgabe der Erfindung auch darin, die geeignete Verwendung eines Brillenglasfertigfabrikats mit angepasster Geometrie beim Beschichtungsvorgang vorzustellen.

Diese Aufgabe wird durch ein Brillenglasfertigfabrikat mit den Merkmalen des Patentanspruchs 1, ein Verfahren zur Herstellung eines Brillenglasfertigfabrikats mit den Merkmalen des Patentanspruchs 8, eine Vorrichtung zur Herstellung eines Brillenglasfertigfabrikats mit den Merkmalen eines der Patentansprüche 9 oder 10 sowie eine Verwendung eines Brillenglasfertigfabrikats mit einer auf einen Beschichtungsvorgang angepasster Geometrie mit den Merkmalen des Patentanspruchs 11 gelöst. Vorteilhafte Ausführungen und Weiterbildungen der Erfindung sind in den Unteransprüchen angegeben.

Das erfindungsgemäße Brillenglasfertigfabrikat weist eine Oberfläche auf, welche durch eine nach außen weisende Wölbung aufweisende, optisch fertig bearbeitete Vorderfläche, eine nach innen weisende Wölbung aufweisende, optisch fertig bearbeitete Rückfläche und eine die Vorderfläche und die Rückfläche miteinander verbindende zylinderförmige Zylinderrandfläche gebildet ist.

Vorderfläche bezeichnet entsprechend vorstehender Definition, die Fläche, die für die Herstellung der Fläche vorgesehen ist, die bei bestimmungsgemäßem Gebrauch der Brille dem Objekt zugewandt ist. Rückfläche bezeichnet demzufolge, die Fläche, die für die Herstellung der Fläche vorgesehen ist, die bei bestimmungsgemäßem Gebrauch der Brille dem Auge des Brillenträgers zugewandt ist. Unter dem Ausdruck "wonach die Vorderfläche eine nach außen weisende Wölbung aufweist" ist zu verstehen, dass die Vorderfläche als solche konvex gekrümmt ist, wobei nicht ausgeschlossen sein soll, dass die Vorderfläche lokal eine konkave Krümmung aufweisen kann. Dass die Rückfläche eine nach innen weisende Wölbung aufweist bedeutet, dass die Rückfläche als solche konkav gekrümmt ist, wobei wiederum nicht ausgeschlossen ist, dass die Rückseite z.B. im Nahteil lokal eine konvexe Krümmung aufweist, um das Brillenglas möglichst dünn und damit leicht zu machen. Optisch fertig bearbeitet bedeutet wie oben bereits ausgeführt wurde, dass die bei bestimmungsgemäßem Gebrauch zum Durchblick des Brillenträgers vorgesehenen Flächenbereiche die zur Erzeugung der komigierenden Wirkung notwendigen Krümmungen aufweisen. An Teile, die beim Einschleifen des Brillenglases, d.h. dem Einbringen des Brillenglases in die Fassung, später entfernt werden, können demnach geringere oder keine Qualitätsanforderungen hinsichtlich ihrer optischen Eigenschaften gestellt werden. Die zylinderförmige Zylinderrandfläche bildet demnach die gesamte Zylindermantelfläche. Die Vorderfläche umfasst die gesamte Fläche, die in eine Richtung der Zylinderachse der zylinderförmigen Randfläche ausgerichtet ist, einschließlich der Flächenbereiche, die beim Einschleifen des Brillenglases abgeschnitten werden. Die Rückfläche umfasst alle Flächenbereiche, die der Vorderfläche gegenüber liegen einschließlich etwaiger Stütz- oder Auflageflächen, die beim Einschleifen des Brillenglases abgeschnitten werden.

Bei dem erfindungsgemäßen Brillenglasfertigfabrikat ist die Zylinderrandfläche rückflächenseitig durch eine umlaufende Linie begrenzt, die in einer Ebene liegt, die senkrecht zu der Zylinderrandfläche angeordnet ist. Insbesondere sind keine Kerben, wie sie z.B. bei dem Rohling nach der US 2004/0066487 A1 als Klemmteil vorgesehen sind, oder sonstige Einbuchtungen, Ausnehmungen, Aussparungen oder dergleichen vorhanden. Anders ausgedrückt bildet die Zylinderrandfläche und die dieser zylinderförmigen Zylinderrandfläche gegenüberliegende nach innen weisende Teilfläche einen geschlossenen Mantelkörper in der Art eines verstärkten umlaufenden Randes, welcher als Schutz vor Kontamination bei der einseitigen Beschichtung der Vorderfläche eingesetzt werden kann. Erfindungsgemäß wird demnach eine neuartige Geometrie für ein Brillenglasfertigfabrikat vorgeschlagen, die mit bisherigen Fertigungsprozessen kompatibel ist, jedoch keine umständlichen Schutzmaßnahmen der Rückfläche bei Beschichtungsvorgängen der Vorderfläche erfordert. Sämtliche Handhabungsschritte können über den umlaufenden Rand erfolgen. Durch die geeignete Ausformung des umlaufenden Randes ergibt sich nur eine unwesentliche Vergrößerung des Platzbedarfs gegenüber herkömmlichen Brillenglasfertigfabrikaten. Nach Fertigstellung des Brillenglases, insbesondere nach erfolgter Beschichtung kann der umlaufende Rand mit Hilfe der industriell üblichen Verfahren aus dem Bereich Formranden und/oder Einschleifen entfernt werden. Dies kann sogar beim Optiker geschehen. Es entsteht kein höheres Risiko für einen Qualitätsverlust oder für einen Verlust an Ausbeute, da die Geometrie des Brillenglases in jedem Fall an die Fassung angepasst werden muss. Eine Verschlechterung der Qualität der Reinigung unter Verwendung der Standardreinigungsverfahren (Bürstenwaschen, Spülen etc.) auf der Hohlseite ist nicht zu erwarten, da die Randgeometrie so gewählt werden kann, dass die Glasgeometrie insgesamt innerhalb der maximalen Hüllkurve für Rezeptgläser bleibt.

Der Rand verstärkt darüber hinaus die Formstabilität des Brillenglases bei Temperprozessen, so dass nicht mit einer Deformation zu rechnen ist. Ebenso ergibt sich nur ein gegenüber herkömmlichen Brillengläsern geringer Materialmehrverbrauch bei der Herstellung der Brillengläser, da Fertiggläser sowieso mit einem Spritz- oder Gießkanal (Füllkanal) hergestellt werden, der ansonsten entfernt wird. In der vorgeschlagenen Lösung ist dies nicht mehr notwendig, wenn der Spritz- oder Gießkanal geeignet umgestaltet wird. Die eingangs gestellte Aufgabe wird durch das erfindungsgemäß ausgestaltete Brillenglasfertigfabrikat vollumfänglich gelöst.

Die umlaufende Linie ist in den einfachsten Fällen ein Kreisrand oder der Rand einer Ellipse. Grundsätzlich kann die umlaufende Linie eine beliebige geschlossene Gestalt aufweisen. In der Praxis haben sich die beiden erstgenannten Formen bewährt.

Die umlaufende Linie kann die einzige rückflächenseitige Begrenzung darstellen. Anders ausgedrückt kann der oben beschriebene Mantelkörper durch die zylindrische Zylinderrandfläche und eine gegenüberliegende nach innen weisende Teilfläche der Rückfläche gebildet werden, die sich quasi in der umlaufenden Linie schneiden. Die umlaufende Linie bildet dann die Möglichkeit einer rückseitigen Auflage des Brillenglasfertigfabrikats auf einer Ebene.

Die umlaufende Linie kann aber auch Bestandteil einer ebenen Teilfläche der Rückfläche sein. Dies hat den Vorteil gegenüber der zuvor beschriebenen Variante, dass die Gefahr einer Beschädigung beim Kontakt mit einem Gegenstand, insbesondere einer Auflageebene verringert wird. Die ebene Teilfläche kann als Anlagefläche zum Ablegen des Fertigfabrikats auf einer ebenen Fläche verwendet werden, wobei verhindert wird, dass optische Funktionsflächen des Brillenglasfertigfabrikats mit der Auflagefläche in Kontakt kommen. Ein Zerkratzen der optischen Funktionsflächen wird dadurch vermieden. Weiterhin kann die ebene Teilfläche als Anlagefläche für einen Halter ähnlich der in der US 2004/0066487 A1 beschriebenen Weise dienen. Dabei können in die innenweisende Teilfläche der Rückfläche auch entsprechende Kerben eingebracht sein, um eine Lageorientierung beim Blocken zu ermöglichen. Wichtig ist jedoch, dass die die zylindrische Zylinderrandfläche begrenzende umlaufende Linie in einer Ebene liegt, d.h. die Zylinderrandfläche keine Kerbung aufweist.

Die einen geraden Zylinder einschließende zylinderförmige Zylinderrandfläche kann eine Mindesthöhe von 8 mm aufweisen. Wie experimentelle Untersuchungen zeigen, ist damit zum einen sichergestellt, dass die Zylinderrandfläche bei allen gängigen Beschichtungsverfahren einen hinreichenden Schutz vor Kontamination der Rückfläche durch das Beschichtungsmaterial gewährleistet und zum anderen, dass mit Hilfe eines geeigneten Halters sogar eine Halterung am Zylinderrand erfolgen kann.

Erhöht man die Höhe der zylindrischen Zylinderrandfläche auf über 9 mm, über 10 mm oder gar über 11 mm, so steigt der Schutz vor Kontamination der Rückfläche durch das Beschichtungsmaterial und die Eignung als Anlagefläche für einen Halter zum Halten bei etwaigen Beschichtungs- oder Reinigungsverfahren in entsprechender Weise an.

Zur Klarstellung wird im Folgenden erläutert, was unter der Höhe der zylindrischen Zylinderrandfläche zu verstehen ist:
Ein endlicher Zylinder ist laut der allgemeinen Definition ein von zwei parallelen, ebenen, kongruenten Flächen, nämlich der Grund- und der Deckfläche, und einer Mantel- bzw. Zylinderfläche begrenzter Körper, wobei die Mantelfläche von parallelen Geraden gebildet wird. Das heißt, der Zylinder entsteht durch Verschiebung einer ebenen Fläche oder Kurve entlang einer Geraden, die nicht in dieser Ebene liegt. Die Höhe des Zylinders ist gegeben durch den Abstand der beiden Ebenen, in denen Grund- und Deckfläche liegen. Sind die Geraden senkrecht zu Grund- und Deckfläche, spricht man von einem geraden Zylinder.

Im vorliegenden Fall ist die Zylinderrandfläche rückflächenseitig durch die umlaufende Linie begrenzt, die einerseits die größte Erhebung der Rückfläche bildet und die andererseits entsprechend der obigen Definition in einer Ebene liegt, die senkrecht auf der Zylinderrandfläche steht. Das von der Zylinderrandfläche, der durch die umlaufende Linie festgelegte Ebene und einer parallel zur durch die umlaufende Linie festgelegten Ebene in Richtung der Vorderfläche verschobenen Ebene gebildete Volumen stellt einen endlichen geraden Zylinder dar. Die Höhe dieses Zylinders stellt die Höhe der zylindrischen Zylinderrandfläche dar.

Eine der zylinderförmigen Zylinderrandfläche gegenüberliegende Teilfläche der Rückfläche kann kegelförmig, insbesondere in Bezug auf die durch die umlaufende Linie festgelegte Ebene als gerader Kegel, oder zylinderförmig, insbesondere in Bezug auf die durch die umlaufende Linie festgelegte Ebene als gerader Zylinder, ausgebildet sein. Aus Stabilitätsgründen sind die Zylinderrandfläche und die gegenüberliegende Teilfläche vorzugsweise auch punktsymmetrisch zu einer gemeinsamen Mittenachse ausgebildet.

Experimente zeigen, dass es zur Minimierung des (zusätzlichen) Materialbedarfs günstig ist, wenn ein durch die zylinderförmige Zylinderrandfläche und die dieser zylinderförmigen Zylinderrandfläche gegenüberliegenden kegelförmigen oder zylinderförmigen Teilfläche gebildeter Mantelkörper eine maximale Dicke von weniger als 8 mm aufweist. Je nach Höhe der zylindrischen Zylinderrandfläche lässt sich die Dicke auf weniger als 7 mm, weniger als 6 mm oder gar auf weniger als 5 mm reduzieren. Die maximale Dicke liegt in der Regel am zur umlaufenden Linie gegenüberliegenden Ende der Zylinderrandfläche vor.

Die minimale Dicke wird im allgemeinen in der Ebene der ebenen Teilfläche erreicht. Aus Materialersparnisgründen ist es vorteilhaft, wenn die ebene Teilfläche durch eine weitere umlaufende Linie begrenzt ist und der minimale Abstand der umlaufenden Linie und der weiteren umlaufenden Linie kleiner als 7 mm beträgt. Im allgemeinen sind minimale Abstände von weniger als 6 mm, weniger als 5 mm oder gar weniger als 4 mm ausreichend.

Um eine hinreichende Anlagefläche bereitzustellen sollte der minimale Abstand der umlaufenden Linie und der weiteren umlaufenden Linie größer als 0,5 mm sein. Günstiger ist es jedoch, wenn der minimale Abstand größer als 1 mm, größer als 1,5 mm oder gar größer als 2 mm ist.

Als vorteilhaft hat es sich herausgestellt, wenn der minimale Abstand im Bereich zwischen 0,5 mm und 7 mm, vorzugsweise zwischen 6 mm und 1 mm, weiter vorzugsweise zwischen 5 mm und 1,5 mm und höchst vorzugsweise zwischen 1,5 mm und 3 mm beträgt.

Ein erfindungsgemäßes Verfahren zum Herstellen eines Brillenglasfertigfabrikats der oben beschriebenen Art, nämlich mit einer Oberfläche, welche durch eine nach außen weisende Wölbung aufweisende, optisch fertig bearbeitete Vorderfläche, eine nach innen weisende Wölbung aufweisende, optisch fertig bearbeitete Rückfläche und eine die Vorderfläche und die Rückfläche miteinander verbindende zylinderförmige Zylinderrandfläche gebildet ist, wobei die Zylinderrandfläche rückflächenseitig durch eine umlaufende Linie begrenzt wird, die in einer Ebene liegt und die Zylinderrandfläche senkrecht zu der Ebene angeordnet ist, umfasst folgende Verfahrensschritte:
a) Bereitstellen einer Formschale oder eines Spritzgusswerkzeugs und ggf. eines Dichtrings für das Brillenglasfertigfabrikat mit einer zu dessen Oberfläche formkomplementären Gestalt, wobei die formkomplementäre Gestalt der Formschale bzw. des Spritzgusswerkzeugs ggf. jeweils zusammen mit dem Dichtring eine zu der umlaufenden Linie formkomplementäre Linie aufweist, die in einer zu der Ebene formkomplementären Ebene liegt, wobei die Formschale oder das Spritzgusswerkzeug ggf. zusammen mit dem Dichtring einen zylinderförmigen oder zylindermantelförmigen Füll- oder Spritzkanal mit einer Mündung aufweist, die durch eine umlaufende Linie begrenzt wird, die in der formkomplementären Ebene liegt,
b) Abgießen des Brillenglasfertigfabrikats durch Zuführen von fluidem Material durch den Füll- oder Spritzkanal.

Die Ausgestaltung des Füll- oder Spritzkanals in der beschriebenen Form hat den Vorteil, dass weniger Material verbraucht wird, als bei der herkömmlichen Ausgestaltung, da dieser bereits Bestandteil der zum Brillenglasfertigfabrikat (mit erfindungsgemäßer Geometrie) formkomplementären Gestalt der Formschale oder des Spritzgusswerkzeugs bzw. der Kombination aus Formschale und Dichtring oder der Kombination aus Spritzgusswerkzeug und Dichtring ist und nicht vor etwaigen Beschichtungsprozessen entfernt zu werden braucht.

Von besonderem Vorteil ist die Ausgestaltung des Brillenglasfertigfabrikats bei der Verwendung von Materialien wie Polycarbonat, welche per Spritzgussverfahren hergestellt werden), da hier die herzustellende Geometrie durch einfache Modifikation der bestehenden Spritzgusswerkzeuge erzeugt werden kann.

Bei Brillenglasfertigfabrikaten, die im Abgießverfahren hergestellt werden, sind demgegenüber Modifikationen der Formschalen oder des Dichtringes denkbar, um die gewünschte Geometrie zu erhalten.

In entsprechender Weise umfasst eine erfindungsgemäße Vorrichtung zum Herstellen eines Brillenglasfertigfabrikats mit einer Oberfläche, welche durch eine nach außen weisende Wölbung aufweisende, optisch fertig bearbeitete Vorderfläche, eine nach innen weisende Wölbung aufweisende, optisch fertig bearbeitete Rückfläche und eine die Vorderfläche und die Rückfläche miteinander verbindende zylinderförmige Zylinderrandfläche gebildet ist, und welches dadurch gekennzeichnet ist, dass die Zylinderrandfläche rückflächenseitig durch eine umlaufende Linie begrenzt wird, die in einer Ebene liegt und dass die Zylinderrandfläche senkrecht zu der Ebene angeordnet ist, folgendes Bestandteil:
Eine Formschale oder ein Spritzgusswerkzeug für das Brillenglasfertigfabrikat mit einer zu dessen Oberfläche formkomplementärer Gestalt, wobei die formkomplementäre Gestalt der Formschale oder des Spritzgusswerkezugs eine zu der umlaufenden Linie formkomplementäre Linie aufweist, die in einer zu der Ebene formkomplementären Ebene liegt, wobei die Formschale oder das Spritzgusswerkzeug einen zylinderförmigen oder zylindermantelförmigen Füll- oder Spritzkanal mit einer Mündung aufweist, die durch eine umlaufende Linie begrenzt wird, die in der formkomplementären Ebene liegt.

Die Formschale oder das Spritzgusswerkzeug kann auch formkomplementär zu einer oder mehreren der oben im Detail beschriebenen und/oder insbesondere auch zu einer oder mehreren der in den Unteransprüchen aufgeführten besonderes vorteilhaft ausgestalteten Ausführungsvarianten des erfindungsgemäßen Brillenglashalbfabrikats ausgestaltet sein.

Nicht nur die Formschale oder das Spritzgusswerkzeug kann in vorstehend beschriebener Weise ausgebildet sein. Es ist auch möglich, dass die Vorrichtung einen Dichtring aufweist, der für die Formgebung des Brillenglasfertigfabrikats mitverantwortlich ist, wie oben in Bezug auf das Verfahren bereits angedeutet wurde. Anders ausgedrückt können die Formschale und der Dichtring oder das Spritzgusswerkzeug und der Dichtring zusammen eine zu der Oberfläche des Brillenglasfertigfabrikats formkomplementäre Gestalt aufweisen. Bei dieser Variante weist die durch die Formschale und den Dichtring gebildete formkomplementäre Gestalt oder die durch das Spritzgusswerkzeug und den Dichtring gebildete formkomplementäre Gestalt eine zu der umlaufenden Linie des Brillenglasfertigfabrikats eine formkomplementäre Linie auf, die in einer zu der vorbeschriebenen Ebene des Brillenglasfertigfabrikats formkomplementären Ebene liegt. Die durch die Formschale und den Dichtring gebildete formkomplementäre Gestalt oder die durch das Spritzgusswerkzeug und den Dichtring gebildete formkomplementäre Gestalt weist einen zylinderförmigen oder zylindermantelförmigen Füll- oder Spritzkanal mit einer Mündung auf, die durch eine umlaufende Linie begrenzt wird, die in der formkomplementären Ebene liegt.

Ein erfindungsgemäßes Brillenglasfertigfabrikat der oben beschriebenen Art, nämlich ein Brillenglasfertigfabrikat mit einer Oberfläche, welche durch eine nach außen weisende Wölbung aufweisende, optisch fertig bearbeitete Vorderfläche, eine nach innen weisende Wölbung aufweisende, optisch fertig bearbeitete Rückfläche und eine die Vorderfläche und die Rückfläche miteinander verbindende zylinderförmige Zylinderrandfläche gebildet ist, und welches dadurch gekennzeichnet ist, dass die Zylinderrandfläche rückflächenseitig durch eine umlaufende Linie begrenzt wird, die in einer Ebene liegt und dass die Zylinderrandfläche senkrecht zu der Ebene angeordnet ist, wird nach der Erfindung zur Beschichtung dessen Vorderfläche verwendet.

Auch sämtliche oben beschriebenen und/oder in den Unteransprüchen beschriebenen besonders vorteilhaft ausgestalteten Ausführungsvarianten eines erfindungsgemäßen Brillenglasfertigfabrikats können nach der Erfindung zur Beschichtung dessen Vorderfläche verwendet werden. Eine unerwünschte Beschichtung der Rückfläche bei der Beschichtung der Vorderfläche kann durch die Verwendung eines erfindungsgemäßen Brillenglasfertigfabrikats wirkungsvoll vermieden werden.

Die umlaufende Linie kann Bestandteil einer ebenen Teilfläche der Rückfläche sein und das Brillenglasfertigfabrikat kann an der ebenen Teilfläche gehalten werden. Dies hat neben dem zuvor genannten Vorteil auch den Vorteil, dass die die optische Wirkung für den späteren Brillenträger bereitstellende Teilfläche der Rückfläche nicht in Kontakt mit dem das Brillenglashabfabrikat haltenden Halter verbracht werden muss, was potentiell die Gefahr der Beschädigung birgt.

Das erfindungsgemäß ausgestaltete Brillenglasfertigfabrikat ist besonders für die Verwendung bei einer Tauchbeschichtung und/oder einer Rotationsbeschichtung geeignet, da diese in besonderem Maß die Gefahr der Kontamination durch die zur Beschichtung verwendete Flüssigkeit und die Gefahr der Beschädigung durch den während des Beschichtungsprozesses relativ zu der zur Beschichtung verwendeten Flüssigkeit bewegten Halters birgt.

Die Verwendung des erfindungsgemäß ausgestalteten Brillenglasfertigfabrikats erfolgt insbesondere in der Weise, dass das Brillenglasfertigfabrikat bei der Beschichtung der Vorderfläche derart gehalten wird, dass eine Kontamination der Rückfläche vermieden wird.

Die Erfindung wird nachfolgend anhand der Zeichnung näher beschrieben. Es zeigen:
- Figur 1: ein Brillenglasfertigfabrikat nach dem Stand der Technik im Querschnitt,
- Figur 2: ein erfindungsgemäßes Brillenglasfertigfabrikat im Querschnitt,
- Figur 3: eine einseitige Tauchbadbeschichtung eines Brillenglasfertigfabrikats nach der Figur 1,
- Figur 4: eine einseitige Tauchbadbeschichtung eines erfindungsgemäßen Brillenglasfertigfabrikats nach der Figur 2,
- Figur 5: ein erfindungsgemäßes Brillenglasfertigfabrikat nach der Figur 2 im Querschnitt, bei dem kenntlich gemacht ist, welche Teile bei einem Einschleifvorgang entfernt werden,
- Figur 6: eine beidseitige Tauchbadbeschichtung bei einem Brillenglasfertigfabrikat nach dem Stand der Technik entsprechend Figur 1 und bei einem erfindungsgemäßen Brillenglasfertigfabrikats nach der Figur 2,
- Figur 7: eine einseitige Rotationsbeschichtung eines erfindungsgemäßen Brillenglasfertigfabrikats nach der Figur 2,
- Figur 8: eine erfindungsgemäße Vorrichtung mit einer Formschale zum Herstellen eines erfindungsgemäßen Brillenglasfertigfabrikats nach der Figur 2 im Querschnitt,
- Figur 9: eine Alternativvariante der Vorrichtung nach der Figur 8 mit Dichtring,
- Figur 10: eine weitere Alternativvariante der Vorrichtung nach der Figur 8,
- Figur 11: eine erfindungsgemäße Vorrichtung mit einem Spritzgusswerkzeug,
- Figur 12: eine Vorrichtung nach dem Stand der Technik zum Herstellen eines Brillenglasfertigfabrikats nach der Figur 1

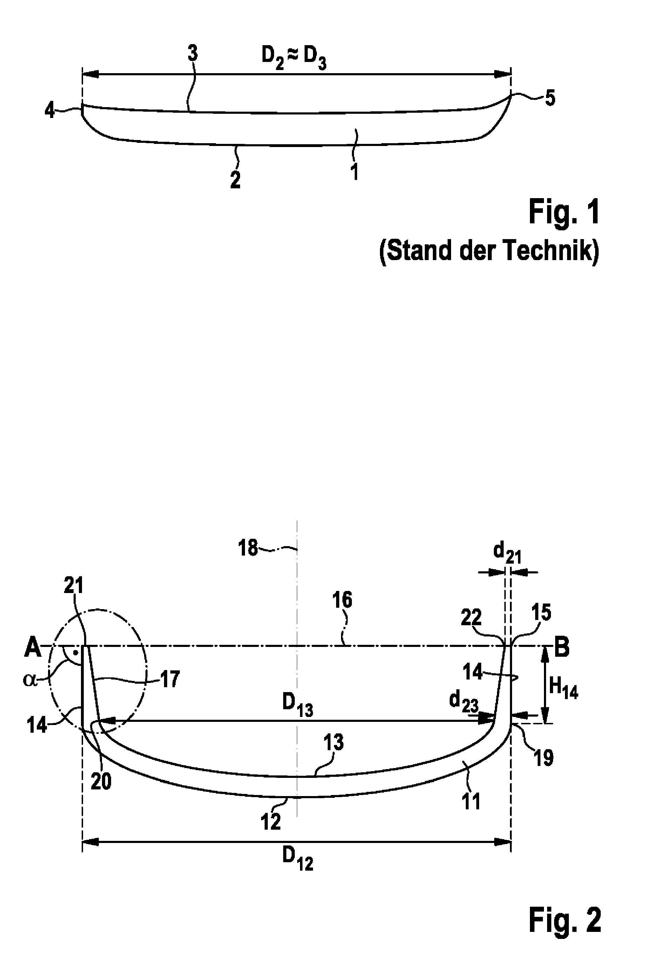

Die Figur 1 zeigt ein Brillenglasfertigfabrikat 1 für ein Gleitsichtglas nach dem Stand der Technik im Querschnitt. Das Brillenglasfertigfabrikat 1 besitzt eine optisch fertig bearbeitete im allgemeinen sphärische Vorderfläche 2 und eine optisch fertig bearbeitete progressive Rückfläche 3, die nach den rezeptierten Vorgaben des späteren Brillenträgers oder allgemeinen Standardgeometriewerten gefertigt wurde. In der Regel handelt es sich bei der Rückfläche 3 um eine Freiformfläche. Diese besitzt keine Symmetrieeigenschaften und lässt sich nicht in geschlossener mathematischer Form beschreiben. Das Brillenglasfertigfabrikat 1 besitzt eine sogenannte Zylinderrandfläche 4, die Vorderfläche 2 und Rückfläche 3 eine geschlossene Oberfläche des Brillenglasfertigfabrikats 1 bildend miteinander verbindet und die den nutzbaren Durchmesser D₂, D₃ der Vorderfläche 2 und der Rückfläche 3 festlegt.

Die Zylinderrandfläche 4 kann zylinderförmig ausgebildet sein, was allerdings nicht zwingend ist. Die umlaufende Kante 5 zwischen Rückfläche 2 und Zylinderrandfläche 4 bildet aufgrund der fehlenden Symmetrie der Rückfläche 3 und der im allgemeinen nicht vorhandenen Zylinderform der Zylinderrandfläche 4 keine Linie, die in einer Ebene liegt und insbesondere liegt sie nicht in einer Ebene, die zur Zylinderrandfläche senkrecht steht. Im Allgemeinen entspricht der nutzbare Durchmesser D₂ der Vorderfläche 2 herkömmlicher Brillenglasfertigfabrikate 1 weitgehend dem nutzbaren Durchmesser D₃ der Rückfläche 3.

Das erfindungsgemäße Brillenglasfertigfabrikat 11 weist nach der Figur 2 eine Oberfläche auf, welche durch eine nach außen weisende Wölbung aufweisende, optisch fertig bearbeitete sphärische Vorderfläche 12, eine nach innen weisende Wölbung aufweisende, optisch fertig bearbeitete Rückfläche 13 und eine die Vorderfläche 12 und die Rückfläche 13 miteinander verbindende kreiszylinderförmige Zylinderrandfläche 14 gebildet ist. Die Zylinderrandfläche 14 ist rückflächenseitig durch eine umlaufende Linie 15 begrenzt. Diese umlaufende Linie 15 liegt in einer gedachten Ebene 16, die in der Figur 2 durch die strichpunktierte Linie A-B kenntlich gemacht ist. Die Zylinderrandfläche 14 ist senkrecht zu der Ebene 16 angeordnet. Der entsprechende 90°-Winkel ist in der Figur 2 mit dem Bezugszeichen α gekennzeichnet.

Eine der zylinderförmigen Zylinderrandfläche 14 gegenüberliegende Teilfläche 17 der Rückfläche 13 ist kegelförmig ausgebildet. In Bezug auf die durch die umlaufende Linie 15 begrenzte Ebene 16 ist die Teilfläche 17 als gerader Kreiskegel ausgebildet. Die Zylinderrandfläche 14 und die Teilfläche 17 besitzen eine gemeinsame Mittenachse 18, welche durch den nicht dargestellten Mittelpunkt der Vorderflächensphäre 12 verläuft.

Der (theoretisch) nutzbare Durchmesser D₁₂ der Vorderfläche 12 ist durch die Schnittlinie 19 zwischen Zylinderrandfläche 14 und Vorderflächensphäre 12 festgelegt. Der (theoretisch) nutzbare Durchmesser D₁₃ der Rückfläche 13 ist durch die aufgrund der Progression der für die optische Wirkung für den späteren Träger erzeugend vorgesehenen Teilfläche nicht in einer Ebene liegende Schnittlinie 20 zwischen der Kegelfläche 17 und der durch die Rezeptwirkung festgelegten übrigen Teilfläche definiert. Dieser ist -wie nachfolgend gezeigt wird nur geringfügig- kleiner als der nutzbare Durchmesser D₁₂ der Vorderfläche 12.

Die umlaufende Linie 15 ist Bestandteil einer ebenen Teilfläche 21 der Rückfläche. Diese ebene Teilfläche 21 ist durch eine weitere umlaufende Linie 22 begrenzt. Im vorliegenden Ausführungsbeispiel sind die beiden umlaufenden Linien 15, 22 kreisförmig ausgebildet. Im allgemeinen Fall können diese jedoch auch jede andere geschlossene Gestalt aufweisen. Es ist z.B. auch möglich, dass diese eine elliptische Form aufweisen. Die umlaufenden Linien 15, 22 können eine voneinander abweichende Gestalt aufweisen, sie können jedoch auch formidentisch ausgestaltet sein.

Der minimale Abstand der umlaufenden Linie 15 und der weiteren umlaufenden Linie 22 ist in der Regel kleiner als 7 mm. Der minimale Abstand der umlaufenden Linie 15 und der weiteren umlaufenden Linie 22 ist meistens größer als 0,5 mm.

Im vorliegenden Ausführungsbeispiel nach der Figur 2 sind die umlaufenden Linien 15, 22 formidentisch kreisförmig und darüber hinaus auch konzentrisch zueinander angeordnet. Aus diesem Grund ergibt sich ein konstanter Abstand d₂₁ der beiden umlaufenden Linien 15, 22, der zugleich den minimalen Abstand d₂₁ beider umlaufenden Linien 15, 22 bildet.

Die einen geraden Zylinder einschließende zylinderförmige Zylinderrandfläche 14 weist eine Höhe H₁₄ auf, die üblicherweise mehr als 8 mm beträgt.

Ein durch die zylinderförmige Zylinderrandfläche 14 und die dieser zylinderförmigen Zylinderrandfläche 14 gegenüberliegende kegelförmige (oder vorliegend nicht dargestellte zylinderförmige) Teilfläche 17 gebildeter Mantelkörper weist eine maximale Dicke d₂₃ von in der Regel weniger als 8 mm auf.

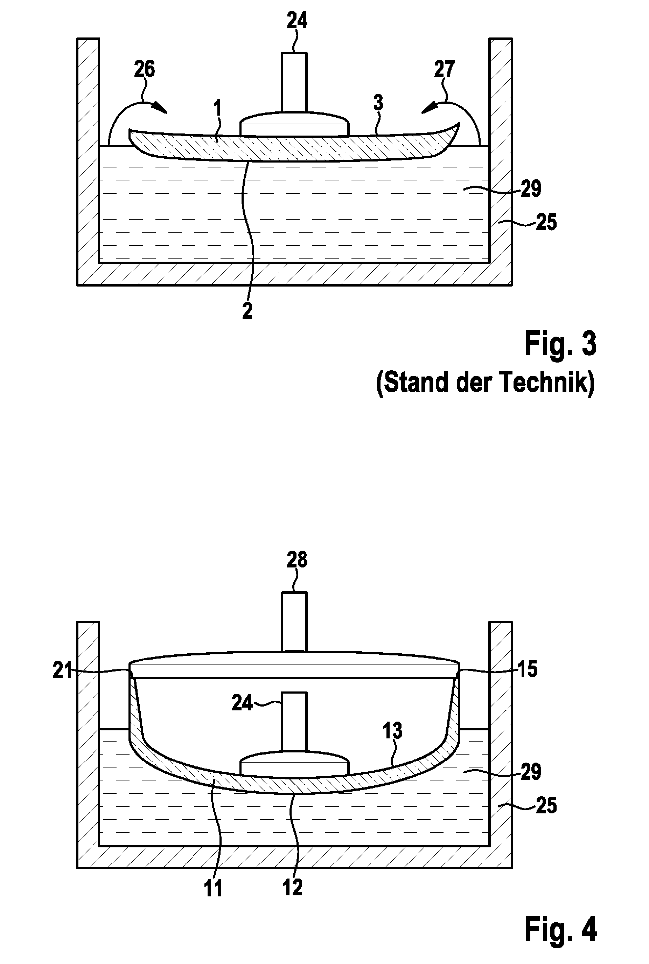

Die Vorteile der erfindungsgemäßen Brillenglasfertigfabrikatgeometrie werden nachfolgend anhand einer graphischen Gegenüberstellung eines Tauchbeschichtungsprozesses nach dem bis dato herkömmlichen Verfahren und eines Tauchbeschichtungsprozesses unter Verwendung eines Brillenglasfertigfabrikats mit erfindungsgemäßer Geometrie erläutert. Die Figur 3 zeigt eine einseitige Tauchbadbeschichtung eines Brillenglasfertigfabrikats nach der Figur 1 wie sie aus dem Stand der Technik bekannt ist. Die Figur 4 zeigt eine einseitige Tauchbadbeschichtung eines erfindungsgemäßen Brillenglasfertigfabrikats nach der Figur 2.

Bei dem herkömmlichen Verfahren nach der Figur 3 wird das Brillenglasfertigfabrikat 1 auf dessen Rückfläche 3 mittels eines hier nicht dargestellten Blockstücks oder eines Vakuumsaugers 24 mittig gehaltert. Zum Beschichten seiner Vorderfläche 2 wird das Brillenglasfertigfabrikat 1 mittels des halternden Blockstücks oder Vakuumsaugers 24 in eine in einer Tauchwanne 25 befindliche, die die Beschichtung bildende Substanz enthaltende Flüssigkeit 29 getaucht.

Aufgrund der vorstehend beschriebenen Brillenglasgeometrie besteht die Gefahr der Kontamination der Rückfläche 3 des Brillenglasfertigfabrikats 1, was in der Zeichnung mit Hilfe der beiden mit den Bezugszeichen 26 und 27 versehenen Pfeilen angedeutet ist.

Bei dem Verfahren mit erfindungsgemäß ausgestaltetem Brillenglasfertigfabrikat 11 kann die Halterung wahlweise wie aus dem Stand der Technik bekannt mittig auf dessen Rückfläche 13 mittels eines hier nicht dargestellten Blockstücks oder eines Vakuumsaugers 24 gehaltert werden. Es ist jedoch auch möglich, das Blockstück oder den Vakuumsauger größer auszugestalten, so dass eine An- bzw. Auflage auf der äußeren Linie 15 oder gar (soweit wie im vorliegenden Ausführungsbeispiel vorhanden) auf der oben beschriebenen ebenen Teilfläche 21 möglich ist. Die Figur 4 skizziert die Geometrie eines entsprechenden Vakuumsaugers 28.

Die erfindungsgemäße Geometrie des Brillenglasfertigfabrikats vermindert bei Verwendung des Vakuumsaugers 24 die Gefahr, dass die in der Tauchwanne 25 befindliche Flüssigkeit 29 die Rückfläche 13 kontaminiert und verhindert bei Verwendung des Vakuumsaugers 28, dass die in der Tauchwanne 25 befindliche Flüssigkeit 29 die Rückfläche 13 kontaminiert.

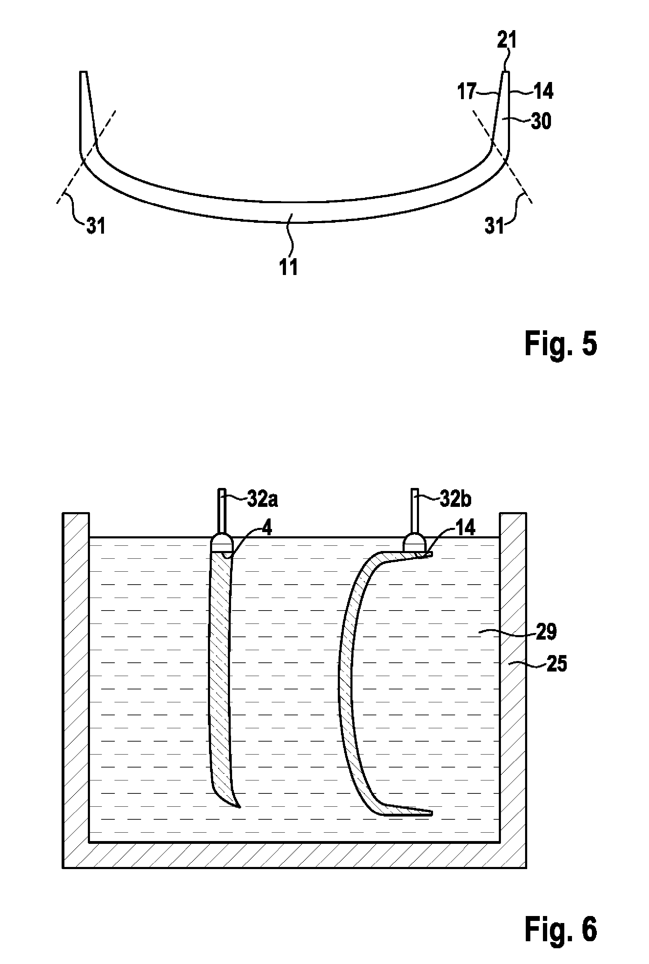

Sämtliche Handhabungsschritte können über den umlaufenden Rand, also konkret die zylinderförmige Zylinderrandfläche 14 und/oder die rückseitige Teilfläche 21 erfolgen, wie dies z.B. in den Figuren 2 und 6 dargestellt ist. Durch die geeignete Ausformung des Randes ergibt sich nur eine unwesentliche Vergrößerung des Platzbedarfes.

Nach Fertigstellung des Brillenglases, insbesondere nach Aufbringen einer Beschichtung auf das Brillenglasfertigfabrikat 11, wird der durch die zylinderförmige Zylinderrandfläche 14, die (im Ausführungsbeispiel kegelförmige) Teilfläche 17 und ggf. wie im vorliegenden Ausführungsbeispiel die rückseitige Teilfläche 21 definierte umlaufende Rand 30 mit Hilfe der industriell üblichen Verfahren aus dem Bereich Formranden /Einschleifen entfernt, wie dies in die Figur 5 durch die mit dem Bezugszeichen 31 gekennzeichnete Schnittlinie angedeutet ist. Dies kann nicht nur beim Hersteller der Brillengläser, sondern sogar bei dessen Kunden, nämlich dem Optiker oder Eye Care Professional (ECP) geschehen. Im letztgenannten Fall entsteht kein höheres Risiko der Zerstörung des Brillenglases, da die Geometrie desselben in jedem Fall an die Fassung angepasst werden muss.

Eine Verschlechterung von Standardreinigungsverfahren (Bürstenwaschen, etc.) auf der (rückwärtigen) Hohlseite ist nicht zu erwarten, da die Randgeometrie so gewählt werden kann, dass die Glasgeometrie insgesamt innerhalb der maximalen Hüllkurve für Rezeptgläser bleibt.

Der Rand verstärkt darüber hinaus die Formstabilität des Glases für Temperprozesse, so dass nicht mit einer Deformation zu rechnen ist. Ebenso ergibt sich nur ein geringer Materialmehrverbrauch bei der Herstellung der Gläser, da Fertiggläser sowieso mit einem Spritzkanal hergestellt werden, der ansonsten entfernt wird. In der vorgegebenen Lösung ist dies nicht mehr notwendig, wenn der Spritzkanal geeignet umgestaltet wird.

Anhand der Figur 6 wird im Folgenden gezeigt, dass das erfindungsgemäße Brillenglasfertigfabrikat auch Vorteile bringt, wenn dieses einer beidseitigen Tauchbadbeschichtung unterzogen wird. Die Figur 6 zeigt in der linken Bildhälfte eine beidseitige Tauchbadbeschichtung bei einem Brillenglasfertigfabrikat 1 nach dem Stand der Technik entsprechend Figur 1 und in der rechten Bildhälfte eine beidseitige Tauchbadbeschichtung bei einem erfindungsgemäßen Brillenglasfertigfabrikat 11 nach der Figur 2. Die Tauchwanne ist wie in den Figuren 3 und 4 mit dem Bezugszeichen 25, das Tauchbad mit dem Bezugszeichen 29 gekennzeichnet.

Beide Brillenglasfertigfabrikate 1 und 11 werden zylinderrandseitig (Bezugszeichen 4, 14) mit Vakuumsaugern 32a, 32b gleicher Bauart gehaltert. Es ist dem Fachmann leicht einsichtig, dass die Halterung des Brillenglasfertigfabrikats 11 nach der Erfindung mittels des Vakuumsaugers 32b die Beschichtung der optisch relevanten Teile nicht beeinträchtigt, wohingegen dies bei der Halterung des Brillenglasfertigfabrikats 1 nach dem Stand der Technik aufgrund dessen räumlich unmittelbar benachbarten Anordnung zu den optischen Wirkflächen nicht vollständig ausgeschlossen werden kann.

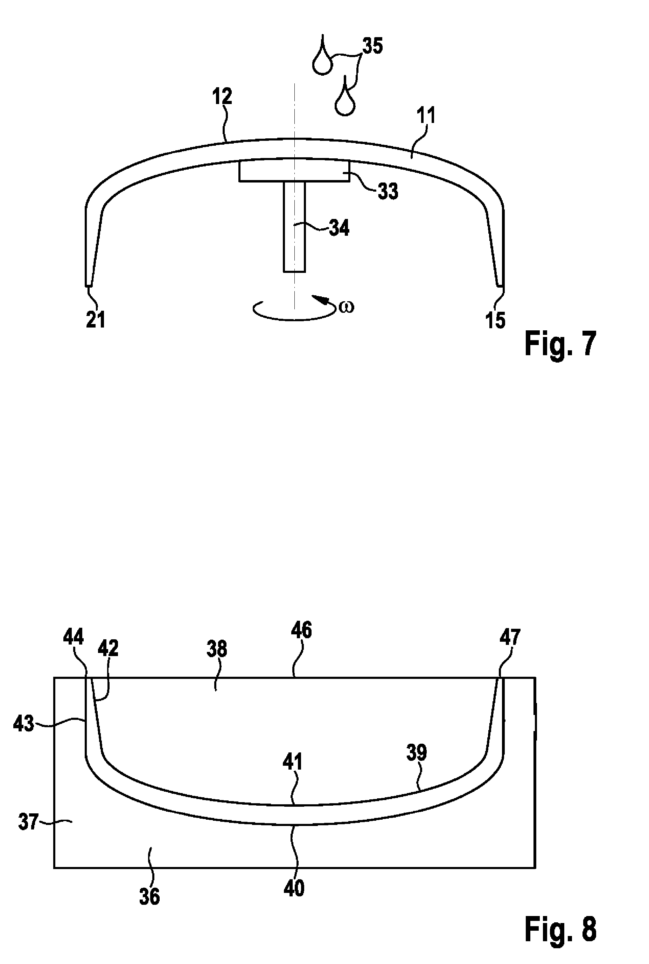

Die Figur 7 zeigt eine einseitige Rotationsbeschichtung eines erfindungsgemäßen Brillenglasfertigfabrikats 11 nach der Figur 2. Das Brillenglasfertigfabrikat 11 wird rückseitig mittig mit Hilfe eines Blockstücks 33 (oder einer anderen Haltevorrichtung wie z.B. eines Vakuumsaugers oder per Gravitation) gehalten. Es erfolgt ein rotatorischer Antrieb ω um die Mittenachse 34 des Blockstücks 33 und des Brillenglasfertigfabrikats 11, während auf die Vorderfläche 12 ein vorzugsweise flüssiger Beschichtungslack 35 aufgebracht wird. Dieser Lack 35 wird aufgrund der Rotationsbewegung ω um die Mittenachse 34 fliehkraftunterstützt über die Vorderfläche 12 verteilt und tropft an den tiefsten Bereichen im Bereich der Teilfläche 21 und/oder der umlaufenden Linie 15 ab. Eine Nasenbildung an für die Bereitstellung der optischen Wirkung für den späteren Brillenträger vorgesehenen Rückflächenabschnitten ist nicht vorgesehen. Es versteht sich von selbst, dass zur Unterstützung der Vermeidung von Nasenbildung die Teilfläche 21 nicht eben, sondern im Querschnitt verrundet ausgebildet sein kann. Hier zeigt sich der Vorteil der geometrischen Ausgestaltung des neuarteigen Brillenglasfertigfabrikats in besonderer Weise, da die während der einseitigen Rotationsbeschichtung der Vorderfläche zu schützende Rückfläche durch die Ausgestaltung des Randes wirkungsvoll vor unerwünschtem Umlaufen des Lackes bewahrt wird.

Die Figur 8 zeigt eine zwei Halbschalen 37, 38 umfassende Formschale 36. Die innere Oberfläche 39 der Formschale 36 weist eine zu der nach außen weisenden Wölbung der Vorderfläche des Brillenglasfertigfabrikats 11 formkomplementäre nach innen weisende Wölbung 40, eine zur nach innen weisenden Wölbung der Rückfläche des Brillenglasfertigfabrikats 11 formkomplementäre nach außen weisende Wölbung 41 und innere und äußere Randflächen 42, 43 auf. Die Gestalt der Formschale 36 für das Brillenglasfertigfabrikat 11 ist insgesamt formkomplementär zum abzugießenden Brillenglasfertigfabrikat 11 ausgebildet. Die formkomplementärer Gestalt der Formschale 36 weist eine zu der umlaufenden Linie 15 des Brillenglasfertigfabrikats 11 formkomplementäre Linie 44 auf, die in einer zu der Ebene 16 formkomplementären Ebene 46 liegt, wobei die Formschale 36 in axialer Verlängerung der äußeren Randflächen 42, 43 einen zylindermantelförmigen Spritzkanal (nicht gezeichnet) mit einer ringförmigen Mündung 47 aufweist, die durch eine umlaufende Linie 44 (fällt im Ausführungsbeispiel mit der formkomplementären Linie 44 zusammen) begrenzt wird, die in der formkomplementären Ebene 46 liegt.

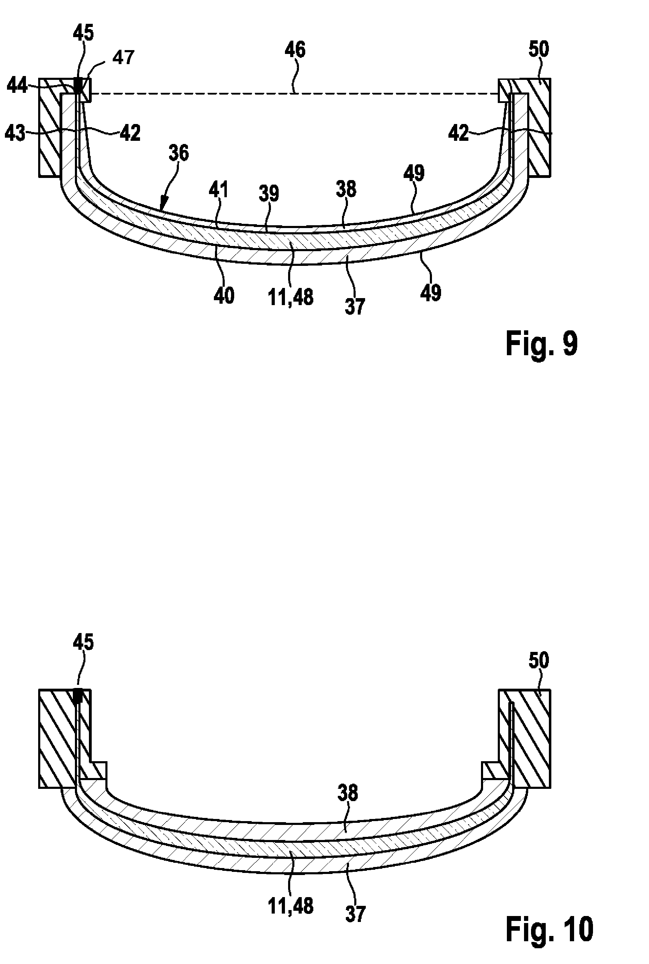

Die Figur 9 zeigt eine Alternativvariante der Vorrichtung nach der Figur 8. Wie die Vorrichtung nach der Figur 8 umfasst die erfindungsgemäße Vorrichtung nach der Figur 9 zwei Halbschalen 37, 38, die eine Formschale 36 bilden. Die innere Oberfläche 39 der Formschale 36 ist in vorstehend beschriebener Weise formkomplementär zum abzugießenden Brillenglasfertigglasfabrikat 11 ausgebildet. Die Figur 9 zeigt in entsprechender Weise die auch in Figur 8 gezeigten Bezugszeichen 40 bis 47. Anstelle eines zylindermantelförmigen Spritzkanals ist im Ausführungsbeispiel nach der Figur 9 ein zylinderförmiger Spritzkanal 45 mit einer kreisförmigen Mündung 47 vorhanden.

Abweichend von der Ausführungsvariante nach der Figur 8 sind die Formhalbschalen 37, 38 nicht blockartig ausgebildet, sondern weisen selbst eine von der dem Hohlraum 48 für das Brillenglasfertigfabrikat 11 bildenden Oberfläche 39 gegenüberliegender Oberfläche 49 mit gewölbter Geometrie auf. Weiterhin ist die innere Randfläche 42 nicht wie beim Ausführungsbeispiel nach der Figur 8 kegelförmig, sondern zylinderförmig ausgebildet.

Des Weiteren ist ein Dichtring 50 vorgesehen, welcher die beiden Halbschalen 37, 38 an deren zylinderradförmigem Ende übergreift und über welchen das Ausgangsmaterial für das Brillenglasfertigfabrikat 11 zugeführt wird.

Die Figur 10 zeigt eine weitere Alternativvaliante der in Figur 8 gezeigten Vorrichtung. Diese Vorrichtung ist ähnlich wie die in der Figur 9 gezeigte Vorrichtung ausgebildet. Sie umfasst zwei Formhalbschalen 37, 38. Diese beiden Formhalbschalen 37, 38 sind jedoch nicht wie bei den Ausführungsvarianten nach den Figuren 8 und 9 einen Hohlraum für den Zylinderrand des Brillenglasfertigfabrikat 11 bildend ausgebildet. Vielmehr ist der Dichtring 50 entsprechend ausgebildet, um diesen zu formen.

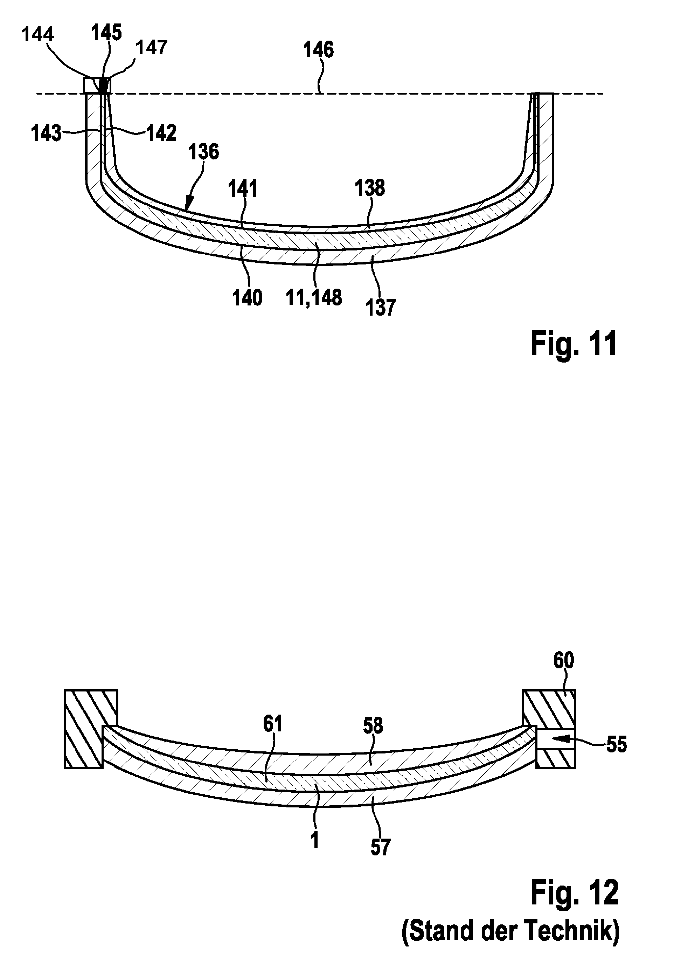

Die Figur 11 zeigt eine erfindungsgemäße Vorrichtung mit einem Spritzgusswerkzeug 136 zum Herstellen eines Brillenglasfertigfabrikats 11. Das Spritzgusswerkzeug 136 umfasst eine Rückflächenform 137 und eine Vorderflächenform 138. Das Spritzgusswerkzeug 136, insbesondere die Rückflächenform 137 und die Vorderflächenform 138, hat eine einen Hohlraum 148 bildende innere Oberfläche, die die Form des zu fertigenden Brillenglasfertigfabrikats 11 vorgibt. Die innere Oberfläche des Spritzgusswerkzeugs 136 hat eine nach innen weisende Wölbung 140 für die Festlegung der optisch fertigen Vorderfläche 12 des Brillenglasfertigfabrikats 11 und eine nach außen weisende Wölbung 141 für die Vorgabe der Form der optisch fertig bearbeiteten Rückfläche 13.

Die beiden Wölbungen 140 und 141 sind über innere und äußere Randflächen 142, 143 miteinander verbunden. Die äußere Randfläche 143 dient zur Formgebung der die Vorderfläche 12 und die Rückfläche 13 des Brillenglasfertigfabrikats 11 miteinander verbindende zylinderförmige Zylinderrandfläche 14.

Das Spritzgusswerkzeug 136 weist einen zylinderförmigen Spritzkanal 145 mit einer kreisförmigen Mündung 147 auf, die durch eine umlaufende Linie 144 begrenzt wird, die in einer Ebene 146 liegt. Der zylinderförmige Spritzkanal 145 nach der Erfindung ist wie in den vorstehend beschriebenen Beispielen normal zur Ebene 146 ausgerichtet.

Zum Vergleich zeigt die Figur 12 eine Vorrichtung nach dem Stand der Technik zum Herstellen eines Brillenglasfertigfabrikats. Eine Vorrichtung der in der Figur 12 gezeigte Art wird zum Abgießen von Lagergläsern 1 des in der Figur 1 gezeigten Typs genutzt. Die Vorrichtung besteht aus einer Vorderflächenform 57 und einer Rückflächenform 58. Vorder- und Rückflächenform 57, 58 werden über einen deren Außenumfang übergreifenden Dichtring 60 zueinander positioniert, so dass die Vorderflächenform 57, die Rückflächenform 58 und der Dichtring zusammen einen der zukünftigen Form des Brillenglases 1 entsprechenden Hohlraum 61 bilden. Der Dichtring 60 weist in radialer Richtung einen Füllkanal 55 bildende Öffnung auf. Demgegenüber verläuft der entsprechende Füll- oder Spritzkanal nach der Erfindung bei den oben beschriebenen Beispielen in axialer Richtung.

## Patentansprüche

1. Brillenglasfertigfabrikat (11) mit einer Oberfläche, welche durch
- eine nach außen weisende Wölbung aufweisende, optisch fertig bearbeitete Vorderfläche (12),
- eine nach innen weisende Wölbung aufweisende, optisch fertig bearbeitete Rückfläche (13) und
- eine die Vorderfläche (12) und die Rückfläche (13) miteinander verbindende zylinderförmige Zylinderrandfläche (14) gebildet ist,
**dadurch gekennzeichnet, dass**
- die Zylinderrandfläche (14) rückflächenseitig durch eine umlaufende Linie (15) begrenzt ist, die in einer Ebene (16) liegt und dass
- die Zylinderrandfläche (14) senkrecht zu der Ebene (16) angeordnet ist.

2. Brillenglasfertigfabrikat (11) nach Anspruch 1, **dadurch gekennzeichnet, dass** die umlaufende Linie (15) Bestandteil einer ebenen Teilfläche (21) der Rückfläche (13) ist.

3. Brillenglasfertigfabrikat (11) nach einem der vorangegangenen Ansprüche, **dadurch gekennzeichnet, dass** die einen geraden Zylinder einschließende zylinderförmige Zylinderrandfläche (14) eine Höhe (H₁₄) von über 8 mm, vorzugsweise von über 9 mm, weiter vorzugsweise von über 10 mm und höchst vorzugsweise von über 11 mm aufweist.

4. Brillenglasfertigfabrikat (11) nach einem der vorangegangenen Ansprüche, **dadurch gekennzeichnet, dass** eine der zylinderförmigen Zylinderrandfläche (14) gegenüberliegende Teilfläche (17) der Rückfläche (13) kegelförmig, insbesondere in Bezug auf die durch die umlaufende Linie (15) begrenzte Ebene (16) als gerader Kegel, oder zylinderförmig, insbesondere in Bezug auf die durch die umlaufende Linie (15) begrenzte Ebene (16) als gerader Zylinder, ausgebildet ist.

5. Brillenglasfertigfabrikat (11) nach Anspruch 4, **dadurch gekennzeichnet, dass** ein durch die zylinderförmige Zylinderrandfläche (14) und die dieser zylinderförmigen Zylinderrandfläche (14) gegenüberliegenden kegelförmigen oder zylinderförmigen Teilfläche (17) gebildeter Mantelkörper (30) eine maximale Dicke (d₂₃) von weniger als 8 mm, vorzugsweise von weniger als 7 mm, weiter vorzugsweise von weniger als 6 mm und höchst vorzugsweise von weniger als 5 mm aufweist.

6. Brillenglasfertigfabrikat (11) nach einem der Ansprüche 2 bis 5, **dadurch gekennzeichnet, dass** die ebene Teilfläche (21) durch eine weitere umlaufende Linie (22) begrenzt ist und dass der minimale Abstand (d₂₁) der umlaufenden Linie (15) und der weiteren umlaufenden Linie (22) kleiner als 7 mm, vorzugsweise kleiner als 6 mm, weiter vorzugsweise kleiner als 5 mm und höchst vorzugsweise kleiner als 4 mm ist.

7. Brillenglasfertigfabrikat (11) nach Anspruch 6, **dadurch gekennzeichnet, dass** der minimale Abstand (d₂₁) der umlaufenden Linie (15) und der weiteren umlaufenden Linie (22) größer als 0,5 mm, vorzugsweise größer als 1 mm, weiter vorzugsweise größer als 1,5 mm und höchst vorzugsweise größer als 2 mm ist.

8. Verfahren zum Herstellen eines Brillenglasfertigfabrikats (11) mit einer Oberfläche, welche durch eine nach außen weisende Wölbung aufweisende, optisch fertig bearbeitete Vorderfläche (12), eine nach innen weisende Wölbung aufweisende, optisch fertig bearbeitete Rückfläche (13) und eine die Vorderfläche (12) und die Rückfläche (13) miteinander verbindende zylinderförmige Zylinderrandfläche (14) gebildet ist, und welches **dadurch gekennzeichnet ist, dass** die Zylinderrandfläche (14) rückflächenseitig durch eine umlaufende Linie (15) begrenzt wird, die in einer Ebene (16) liegt und dass die Zylinderrandfläche (14) senkrecht zu der Ebene (16) angeordnet ist, mit folgenden Verfahrensschritten:
a) Bereitstellen einer Formschale (36) und optional eines Dichtrings (50) oder eines Spritzgusswerkzeugs und optional eines Dichtrings (50) für das Brillenglasfertigfabrikat (11) mit einer zu dessen Oberfläche formkomplementären Gestalt, wobei die formkomplementäre Gestalt der Formschale (36) optional zusammen mit dem Dichtring (50) oder des Spritzgusswerkzeugs optional zusammen mit dem Dichtring (50) eine zu der umlaufenden Linie (15) formkomplementäre Linie (44) aufweist, die in einer zu der Ebene (16) formkomplementären Ebene (46) liegt, wobei die Formschale (36) optional zusammen mit dem Dichtring (50) oder das Spritzgusswerkzeug optional zusammen mit dem Dichtring (50) einen zylinderförmigen oder zylindermantelförmigen Form- oder Spritzkanal (45) mit einer Mündung (47) aufweist, die durch eine umlaufende Linie (44) begrenzt wird, die in der formkomplementären Ebene (46) liegt,
b) Abgießen des Brillenglasfertigfabrikats (11) durch Zuführen von fluidem Material durch den Form- oder Spritzkanal (45).

9. Vorrichtung zum Herstellen eines Brillenglasfertigfabrikats (11) mit einer Oberfläche, welche durch eine nach außen weisende Wölbung aufweisende, optisch fertig bearbeitete Vorderfläche (12), eine nach innen weisende Wölbung aufweisende, optisch fertig bearbeitete Rückfläche (13) und eine die Vorderfläche (12) und die Rückfläche (13) miteinander verbindende zylinderförmige Zylinderrandfläche (14) gebildet ist, und welches **dadurch gekennzeichnet ist, dass** die Zylinderrandfläche (14) rückflächenseitig durch eine umlaufende Linie (15) begrenzt wird, die in einer Ebene (16) liegt und dass die Zylinderrandfläche (14) senkrecht zu der Ebene (16) angeordnet ist, mit folgenden Bestandteilen:
eine Formschale (36) oder ein Spritzgusswerkzeug (136) für das Brillenglasfertigfabrikat (11) mit einer zu dessen Oberfläche formkomplementärer Gestalt, wobei die formkomplementäre Gestalt der Formschale (36) oder des Spritzgusswerkzeugs (136) eine zu der umlaufenden Linie (15) formkomplementäre Linie (44, 144) aufweist, die in einer zu der Ebene (16) formkomplementären Ebene (46, 146) liegt, wobei die Formschale (36) oder das Spritzgusswerkzeug (136) einen zylinderförmigen oder zylindermantelförmigen Füll- oder Spritzkanal (45, 145) mit einer Mündung (47, 147) aufweist, die durch eine umlaufende Linie (44, 144) begrenzt wird, die in der formkomplementären Ebene (46, 146) liegt.

10. Vorrichtung zum Herstellen eines Brillenglasfertigfabrikats (11) mit einer Oberfläche, welche durch eine nach außen weisende Wölbung aufweisende, optisch fertig bearbeitete Vorderfläche (12), eine nach innen weisende Wölbung aufweisende, optisch fertig bearbeitete Rückfläche (13) und eine die Vorderfläche (12) und die Rückfläche (13) miteinander verbindende zylinderförmige Zylinderrandfläche (14) gebildet ist, und welches **dadurch gekennzeichnet ist, dass** die Zylinderrandfläche (14) rückflächenseitig durch eine umlaufende Linie (15) begrenzt wird, die in einer Ebene (16) liegt und dass die Zylinderrandfläche (14) senkrecht zu der Ebene (16) angeordnet ist, mit folgenden Bestandteilen:
eine Formschale (36) oder ein Spritzgusswerkzeug (136) für das Brillenglasfertigfabrikat (11) und ein Dichtring (50), wobei die Formschale (36) und der Dichtring (50) oder das Spritzgusswerkzeug (136) und der Dichtring (50) zusammen eine zu des Oberfläche des Brillenglasfertigfabrikats (11) formkomplementärer Gestalt aufweisen, wobei die durch die Formschale (36) und den Dichtring (50) gebildete formkomplementäre Gestalt oder die durch das Spritzgusswerkzeug (136) und den Dichtring (50) gebildete formkomplementäre Gestalt eine zu der umlaufenden Linie (15) formkomplementäre Linie (44, 144) aufweist, die in einer zu der Ebene (16) formkomplementären Ebene (46, 146) liegt, wobei die durch die Formschale (36) und den Dichtring (50) gebildete formkomplementäre Gestalt oder die durch das Spritzgusswerkzeug (136) und den Dichtring (50) gebildete formkomplementäre Gestalt einen zylinderförmigen oder zylindermantelförmigen Füll- oder Spritzkanal (45, 145) mit einer Mündung (47, 147) aufweist, die durch eine umlaufende Linie (44, 144) begrenzt wird, die in der formkomplementären Ebene (46, 146) liegt.

11. Verwendung eines Brillenglasfertigfabrikats (11) mit einer Oberfläche, welche durch eine nach außen weisende Wölbung aufweisende, optisch fertig bearbeitete Vorderfläche (12), eine nach innen weisende Wölbung aufweisende, optisch fertig bearbeitete Rückfläche (13) und eine die Vorderfläche (12) und die Rückfläche (13) miteinander verbindende zylinderförmige Zylinderrandfläche (14) gebildet ist, und welches **dadurch gekennzeichnet ist, dass** die Zylinderrandfläche (14) rückflächenseitig durch eine umlaufende Linie (15) begrenzt wird, die in einer Ebene (16) liegt und dass die Zylinderrandfläche (14) senkrecht zu der Ebene (16) angeordnet ist, zur Beschichtung der Vorderfläche (12).

12. Verwendung nach Anspruch 11, **dadurch gekennzeichnet, dass** die umlaufende Linie (15) Bestandteil einer ebenen Teilfläche (21) der Rückfläche (13) ist und dass das Brillenglasfertigfabrikat (11) an der ebenen Teilfläche (21) gehalten wird.

13. Verwendung nach einem der Ansprüche 11 oder 12, **dadurch gekennzeichnet, dass** die Beschichtung eine Tauchbeschichtung und/oder eine Rotationsbeschichtung ist.

14. Verwendung nach einem der Ansprüche 11 bis 13, **dadurch gekennzeichnet, dass** das Brillenglasfertigfabrikat (11) bei der Beschichtung der Vorderfläche (12) derart gehalten wird, dass eine Kontamination der Rückfläche (13) vermieden wird.
